# EUROPÄISCHE PATENTSCHRIFT

(11) **EP 0 465 624 B1**
(45) Veröffentlichungstag und Bekanntmachung des Hinweises auf die Patenterteilung: **31.05.1995**
(21) Anmeldenummer: 91902944.7
(22) Anmeldetag: 22.01.1991
(51) Int. Cl.: G05D 7/06, G01F 1/58

(54) **INDUKTIVER DURCHFLUSSMESSER**
INDUCTIVE FLOW METER
DEBITMETRE INDUCTIF

(30) Priorität: 24.01.1990 DE 4002030
(43) Veröffentlichungstag der Anmeldung: 15.01.1992
(73) Patentinhaber: KETELSEN, Broder, D-37124 Rosdorf (DE); KETELSEN, Andres, D-37124 Rosdorf (DE)
(72) Erfinder: KETELSEN, Broder, D-37124 Rosdorf (DE); KETELSEN, Andres, D-37124 Rosdorf (DE)
(74) Vertreter: Dorner, Jörg, Dr.-Ing.
(86) Internationale Anmeldenummer: EP9100116
(87) Internationale Veröffentlichungsnummer: WO9111731

(56) Entgegenhaltungen:
- DE-A- 2 040 682
- DE-A- 2 622 943
- US-A- 4 236 411

## Beschreibung

Die Erfindung betrifft induktive Durchflußmesser mit den Merkmalen des Oberbegriffes von Patentanspruch 1.

Durchflußmesser der hier betrachteten Art dienen zur Bestimmung des Durchflusses elektrisch leitender Flüssigkeiten durch Kanäle oder Rohre insbesondere kreisförmigen Querschnittes. In einem eine elektrisch isolierende Kanalwand oder Rohrwand aufweisenden Kanalabschnitt sind an einander gegenüberliegenden Stellen eines Kanalquerschnittes punktförmige Elektroden vorgesehen, welche zum Kanalinnenraum hin freiliegen und leitende Verbindung zu der leitenden Flüssigkeit aufnehmen. Senkrecht zur Verbindungslinie zwischen den Elektroden und senkrecht zu den Strömungslinien der den Kanal oder das Rohr durchfließenden leitenden Flüssigkeit verlaufen die Feldlinien eines magnetischen Feldes, welches durch eine Permanentmagnetanordnung oder insbesondere durch eine Spulenanordnung erzeugt wird. Strompfade, die von der einen punktförmigen Elektrode zur anderen punktförmigen Elektrode verlaufen und auf dem die Elektroden enthaltenden Rohrabschnitt oder Kanalabschnitt den gesamten Rohrquerschnit oder Kanalquerschnitt durchsetzen, können, wenn sich die leitende Flüssigkeit längs des Kanales oder Rohres gewegt, als im Magnetfeld bewegte Leiter verstanden werden, in denen aufgrund der Flüssigkeitsströmung Spannungen induziert werden, die von den punktförmigen Elektroden über durch die isolierende Kanalwand oder Rohrwand geführte Anschlüsse abgenommen werden und ein Maß für den Durchfluß der leitenden Flüssigkeit durch das Rohr oder den Kanal darstellen.

Zeichnet man in einem zylindrischen Rohrabschnitt oder Kanalabschnitt, welcher eine die Elektroden enthaltende Radialebene als Mittelebene hat, den Rohrquerschnitt in Radialrichtung und auch über eine bestimmte Strecke in Axialrichtung durchsetzende Strompfade ein, so erkennt man, daß eine Strompfadkonzentration im Bereich nahe der punktförmigen Elektroden vorhanden ist, welche, wenn sie mit einem entsprechenden transversalen Magnetfeld in Wechselwirkung kommt, starken Einfluß auf das von den Elektroden abnehmbare Signal hat, welche jedoch bezüglich ihres Einflusses auf die Stärke des Meßsignales ungenutzt bleibt, wenn im elektrodennahen Bereich kein wirksames magnetisches Feld erzeugt wird.

Man erkennt weiterhin, daß bei Ungleichförmigkeiten der Strömungsgeschwindigkeit über den Rohrquerschnitt oder Kanalquerschnitt hin je nach Lage eines Querschnittsbereiches beispielsweise erhöhter Strömungsgeschwindigkeit Meßwertverfälschungen auftreten können, etwa derart, daß ein erhöhter Durchfluß durch das verfälschte Meßsignal vorgetäuscht wird, wenn der Querschnittsbereich erhöhter Durchflußgeschwindigkeit den Elektroden naheliegt und in diesem Bereich auch ein starkes transversales Magentfeld vorgesehen worden ist, während ein geringerer Durchfluß durch das verfälschte Meßsignal vorgetäuscht wird, wenn der Querschnittsbereich erhöhten Durchflusses von den Elektroden entfernt gelegen ist und dort verhältnismäßig geringere Feldstärken des transversalen magnetischen Feldes herrschen.

Zur Verringerung der Meßwertverfälschung durch ungleichförmige Strömungsverteilung hat man bereits versucht, eine Kompensation dadurch herbeizuführen, daß man, wie in der Deutschen Offenlegungsschrift 26 22 943 angegeben, bei der Erzeugung des Magnetfeldes mittels stromdurchflossener Spulen zusätzliche Kompensationsspulen vorsah, die stromaufwärts und stromabwärts von der die Elektroden enthaltenden Querschnittsebene des Kanales oder Rohres zur Erzeugung induzierter Spannungen in den Strompfaden die Strömung durchsetzten, wobei die Orientierung dieser zur Kompensation dienenden Magnetfelder zu dem Hauptmagnetfeld entgegengesetzt gerichtet war.

Im Bereich der die Elektroden enthaltenden Radialebene wurden bei einer aus der Deutschen Offenlegungsschrift 26 22 943 bekannten Anordnung weitere Magnetfelderzeugungseinrichtungen im elektrodennahen Bereich der Rohrwand vorgesehen, die zum Hauptmagnetfeld gleichgerichtete Hilfsmagnetfelder erzeugten, welche den elektrodennahen Bereich des Rohrquerschnittes durchsetzten.

Der aus der genannten Offenlegungsschrift bekannte Durchflußmesser sah an der Rohrwand oder Kanalwand längs eines bestimmten Längenstückes anliegende Spulenträger nach Art gedruckter Schaltungen vor, woraus sich ein komplizierter Aufbau ergab und für unterschiedliche Rohrbereiche die erforderliche Leiterkonfiguration nach einem komplizierten Verfahren errechnet werden mußte. Wegen der Beschränkung der erzielbaren Durchflutungen in den als Spulen wirkenden Leitergebilden war die bekannte Einrichtung auf einen engen Durchmesserbereich der Rohrquerschnitte beschränkt.

Durch die Erfindung soll die Aufgabe gelöst werden, einen induktiven Durchflußmesser mit den Merkmalen des Oberbegriffes von Patentanspruch 1 so auszugestalten, daß unter Vermeidung eines komplizierten Aufbaus der Magnetfelderzeugungseinrichtungen für die Erregung des transversalen Magnetfeldes eine verbesserte Unabhängigkeit des Meßergebnisses von der Verteilung der Strömungsgeschwindigkeit über den Querschnitt des zur Fortleitung des Flüssigkeitsstromes verwendeten Rohres oder Kanales erreicht wird.

Diese Aufgabe wird durch die kennzeichnenden Merkmale von Patentanspruch 1 gelöst. Vorteilhafte Ausgestaltungen und Weiterbildungen sind Gegenstand der dem Anspruch 1 nachgeordneten Patentansprüche.

Erwähnenswerte Vorteile der vorliegend angegebenen Konstruktion sind der einfache Aufbau, die Robustheit sowie die Möglichkeit, die vorgeschlagene Konstruktion auf beliebige Querschnitte von Rohren oder Flüssigkeitskanälen abstimmen zu können.

Nachfolgend wird die Erfindung anhand von Ausführungsbeispielen unter Bezugnahme auf die Zeichnung näher erläutert.

Es stellen dar:
- Fig. 1: einen Schnitt durch einen induktiven Durchflußmesser in einer Radialebne zu der Längsachse des Strömungskanales oder Strömungsrohres im Bereich der Elektroden.
- Fig. 1a: eine schematische perspektivische Darstellung bestimmter axial aufeinanderfolgender zylindrischer Bereiche eines den vorliegend angegebenen Durchflußmesser enthaltenden Rohrabschnittes oder Kanalabschnittes,
- Fig. 2: eine teilweise im Axiallängsschnitt gezeigte praktische Ausführungsform eines induktiven Stömungsmessers der vorliegenden Art,
- Fig. 3: einen Querschnitt entsprechend der in Figur 2 angedeuteten Schnittebene A-A,
- Fig. 4: einen Querschnitt entsprechend der in Figur 2 angedeuteten Schnittebene B-B,
- Fig. 5: eine teilweise im Axiallängsschnitt gezeichnete Seitenansicht einer weiteren Ausführungsform des vorliegend angegebenen induktiven Durchflußmessers,
- Fig. 6: eine Querschnittsdarstellung entsprechend der in Figur 5 angedeuteten Schnittebene A-A,
- Fig. 7: eine Querschnittsdarstellung der Einrichtung nach Figur 5 entsprechend der in dieser Zeichnungsfigur angedeuteten Schnittebenenorientierung B-B,
- Fig. 8: eine schematische Seitenansicht einer wiederum anderen Ausführungsform des vorliegenden induktiven Durchflußmessers,
- Fig. 9: eine schematische Querschnittsdarstellung entsprechend der in Figur 8 angedeuteten Schnittebene A-A und
- Fig. 10: eine schematische Schnittdarstellung entsprechend der in Figur 8 angedeuteten Schnittebene B-B.

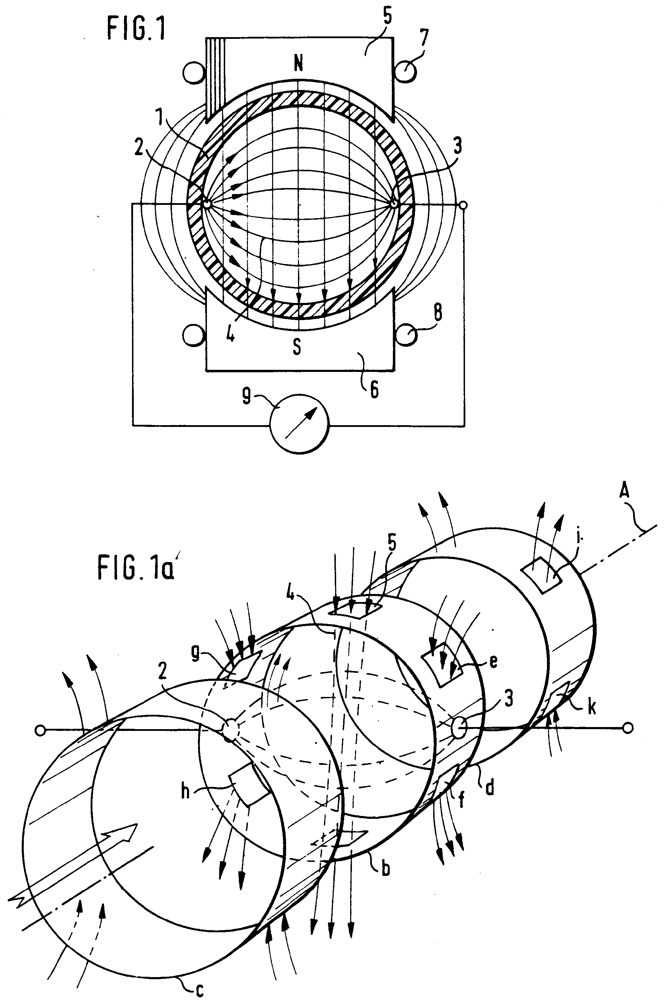

Aus Figur 1 ist erkennbar, daß der Strömungskanal, der die bezüglich des Durchflusses zu untersuchende Strömung einer elektrisch leitfähigen Flüssigkeit enthält, mit 1 bezeichnet ist und von einem Isolierrohr gebildet ist. In die Wandung des Isolierrohres 1 sind an einander über den Querschnitt des Strömungskanals diametral gegenüberliegenden Stellen Elektroden 2 und 3 eingelassen, von denen über Anschlüsse elektrische Meßsignale abnehmbar sind. Senkrecht zu der Verbindungslinie zwischen den Elektroden 2 und 3 und auch senkrecht zu den Strömungslinien einer elektrisch leitfähigen Flüssigkeit innerhalb des Kanalrohres 1 sind die magnetischen Feldlinien 4 eines Magnetfeldes orientiert, das zwischen den Magnetpolen 5 und 6 verläuft, die von erregenden, stromdurchflossenen Spulen 7 und 8 umschlungen sind. Bei Bewegung der sich zwischen den Elektroden 2 und 3 aufspannenden Strompfade in dem von den Magnetpolen 5 und 6 innerhalb des Strömungskanalquerschnittes aufgebauten magnetischen Feld tritt eine zu der Durchflußmenge in Beziehung stehende, resultierende elektrische Spannung zwischen den Elektroden 2 und 3 auf, welche durch das Meßgerät 9 gemessen wird, wobei das Meßsignal entsprechend der Anzeige des Meßgerätes 9 ein Maß für den Durchfluß durch den Innenraum des Strömungskanals oder des Kanalrohres 1 darstellt.

Figur 1a zeigt zur Erleichterung des qualitativen Verständnisses der physikalischen Vorgänge drei in Axialrichtung hintereinanderfolgende zylindrische Abschnitte des den induktiven Durchflußmesser enthaltenden Rohres oder Kanales mit einem mittleren Bereich b, welcher eine die Elektroden 2 und 3 enthaltende Radialebene als Mittelebene aufweist und einen stromauf gelegenen Kanalabschnitt c sowie einem stromabwärts gelegenen Kanalabschnitt d.

Würden die von dem Magnetpol 5 ausgehenden und auf den Magentpol 6 treffenden magnetischen Feldlinien 4 nur einen eng begrenzten Bereich des Kanalquerschnittes um eine Durchmesserlinie herum senkrecht zur Verbindungslinie zwischen den Elektroden 2 und 3 durchsetzen, wie in Figur 1a schematisch angedeutet ist, so erführe die Strömung im Rohr oder Kanal nahe dessen Achse A eine bevorzugte Berücksichtigung im Meßsignal, während die Strömung in den Bereichen nahe der Rohrwandung oder Kanalwandung vergleichsweise wenig zur Größe des Meßsignales zwischen den Elektroden 2 und 3 beitrüge, da sich das Magentfeld 4 nicht in die Bereiche großer Strompfadkonzentration nahe den Elektroden 2 und 3 hineinerstreckt und andererseits im Bereich nahe den Magnetpolen 5 und 6 an der Rohrwandung nur mehr eine geringe Konzentration der Strompfade festzustellen ist, welche von den magnetischen Feldlinien 4 gekreuzt werden. Eine stärkere Berücksichtigung der Strömung im wandnahen Bereich innerhalb des Rohres oder Kanales im Meßsignal erreicht man zwar durch zu dem Magnetfeld 4 gleichgerichtete Hilfsfelder zwischen den in Figur 1a angegebenen Hilfpolen e und f einerseits und g und h andererseits, doch genügt diese Maßnahme allein nicht zur ausreichenden Vermeidung von Meßwertverfälschungen, wenn das Strömungsprofil über den Rohrquerschnitt hin nicht rotationssymmetrisch ist und außerdem zeigt sich, daß auch bei einer Anordnung, die nur die Magnetpole 5 und 6 sowie die Hilfspole e und f sowie g und h enthält, der Beitrag des achsennahen Querschnittsbereiches zum nun resultierenden, von den Elektroden 2 und 3 abnehmbaren Meßsignales wenig verändert, der Beitrag des randnahen Querschnittsbereiches zu diesem resultierenden Meßsignal aber wesentlich erhöht wird. Somit tritt auch bei rotationssymmetrischem Strömungsprofil ein Meßfehler auf, der von der Strömungsgeschwindigkeit abhängig ist.

Diese Schwierigkeit wird nun dadurch behoben, daß im stromaufwärts gelegenen Kanalabschnitt c und im stromabwärts gelegenen Kanalabschnitt d weitere, zum Hauptmagnetfeld 4 entgegengesetzt gerichtete Magnetfelder den Rohrquerschnitt oder Kanalquerschnitt durchsetzen, wobei diese Magnetfelder zwischen Polpaaren i, k, angeregt werden. Zur Vereinfachung der Darstellung ist nur ein solches Hilfspolpaar i und k im stromabwärts gelegenen Kanalabschnitt d schematisch angedeutet. Die zwischen den Polpaaren i und k stromaufwärts und stromabwärts vom mittleren Kanalabschnitt b erzeugten Magnetfelder durchsetzen den jeweiligen Rohrabschnitt oder Kanalabschnitt in solcher Weise, daß in dem zwischen den Elektroden 2 und 3 erzeugten Meßsignal die näher an der Rohrachse verlaufende Strömung etwas geringere Berücksichti gung erfährt, als wenn das Magnetfeld 4 zwischen den Magnetpolen 5 und 6 ohne die Hilfsfelder e bis h alleine vorhanden wäre, wobei die Hilfsfelder zwischen den Magnetpolen i und k gleichzeitig die nachteilige Wirkung aus der Felderhöhung durch die Hilfsfelder e bis h im Bereich der den Elektroden naheliegenden Strömungswegen korrigieren.

Zur Vermeidung von Mißverständnissen sei noch darauf hingewiesen, daß selbstverständlich die Rohrabschnitte oder Kanalabschnitte b, c und d praktisch unmittelbar aneinandergrenzen und die sich zwischen den Elektroden 2 und 3 ausspannenden Strompfade selbstverständlich auch die Kanalabschnitte c und d durchsetzen, da man sich das aus den Strompfaden zwischen den Elektroden 2 und 3 erzeugte Gebilde nicht flächig sondern räumlich und stromaufwärts sowie stromabwärts ausgedehnt vorzustellen hat.

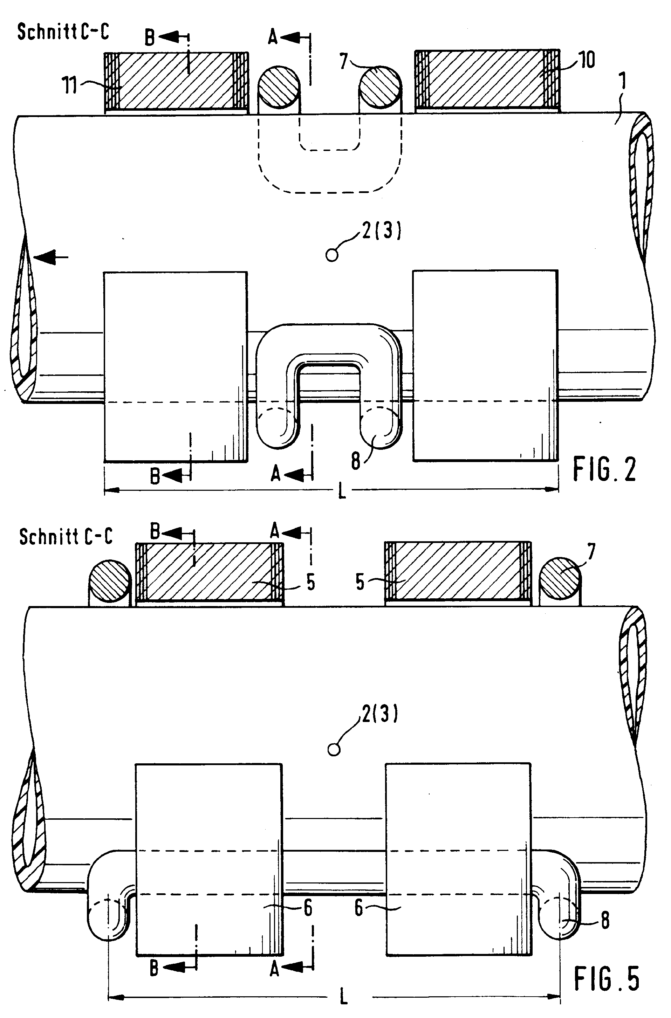

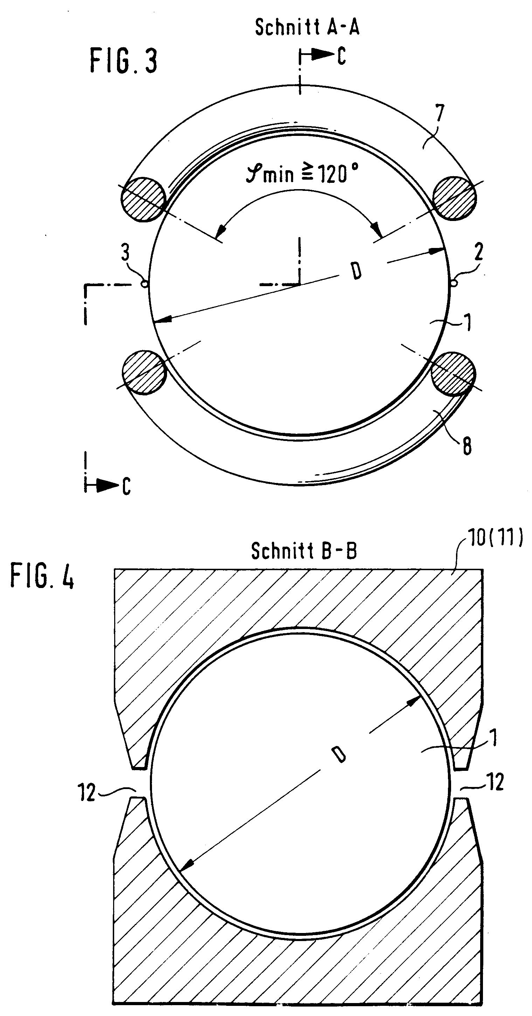

Figur 2 zeigt ein praktisches Ausführungsbeispiel eines induktiven Durchflußmessers mit einem Strömungskanal oder Strömungsrohr in Gestalt eines im Querschnitt kreisförmigen Kunststoffrohres, welches wiederum mit 1 bezeichnet ist. An einander diametral gegenüberliegenden Stellen des Kunststoffrohres 1 ist dessen Wandung von Anschlußleitern durchdrungen, welche in Elektroden 2 bzw. 3 enden, die zu dem die elektrisch leitende Flüssigkeit führenden Kanal hin freiliegen und elektrischen Kontakt zu der durchgeleiteten, elektrisch leitfähigen Flüssigkeit aufnehmen können. Die in entsprechender Weise wie in Figur 1 mit 7 und 8 bezeichneten Magnetspulen haben solche Gestalt, daß sie das Kunststoffrohr 1 über einen Winkel von mindestens jeweils 120° umschlingen, wie man aus Figur 3 erkennt. Den Polschuhen von 5 und 6 von Figur 1 entsprechende Teile sind in Figur 2 nicht eingezeichnet, doch können solche Polschuhe vorgesehen und entsprechend den allgemein bekannten Konstruktionsprinzipien zur Verminderung des Widerstandes des magnetischen Schließungskreises ausgebildet sein, so daß ein intensives Magnetfeld den Strömungskanal oder das Strömungsrohr in einer Richtung senkrecht zu dessen Längsachse sowie senkrecht zur Verbindungslinie zwischen den Elektroden 2 und 3 durchsetzt. Die Erregerspulen 7 und 8 sind selbstverständlich in solcher Weise zusammengeschaltet oder mit Strom entsprechender Richtung beaufschlagt, daß sich an den einander gegenüberliegenden Stellen des Strömungskanales oder Strömungsrohres 1 ungleichnahmige Magnetpole ausbilden (siehe Figur 1).

Der große Umschlingungwinkel von mindestens 120° bewirkt das, was bei der Erläuterung der Darstellung von Figur 1a durch die Hinzunahme der Hilfspole e und f sowie g und h ausgeführt wurde.

Auf diese Ausführungen sei hier ausdrücklich hingewiesen.
Ein Durchflußmesser der vorliegend angegebenen Art erreicht also durch den großen Umschlingungswinkel der Spulen 7 und 8 bzw. zugehöriger Polschuhe mit einer einzigen Maßnahme, daß bezüglich des wirksamen Magentfeldes die in Figur 1a bezüglich des Kanalabschnittes b beschriebenen Verhältnisse herrschen. Soweit es die stromauf und stromab gelegenen Kanalabschnitte c und d betrifft, werden die dort wünschenswerten Magnetfelder durch die nachfolgend beschriebenen Maßnahmen in einfachster Weise verwirklicht.

Stromaufwärts und stromabwärts von der die Elektroden 2 und 3 enthaltenden Radialebene mit Bezug auf die Längsachse des Strömungskanales oder Rohres 1 befinden sich Rückfluß-Blechpakete 10 bzw. 11, deren Querschnittsgestalt mit Bezug auf einen Radialschnitt aus Figur 4 der Zeichnung erkennbar ist.

Die den magnetischen Rückschluß erzeugenden Blechpakete 10 und 11 umschließen den Strömungskanal oder das Strömungsrohr 1 nicht etwa ringförmig (solches ist aus der Deutschen Auslegeschrift 20 40 682 für andere Zwecke an sich bekannt), sondern sind, wie der Fachmann ohne weiteres aus Figur 4 entnimmt, im Bereich eines Spaltes geteilt, so daß ein achsparallel verlaufender Spaltraum 12 vorhanden ist, der bewirkt, daß die magentischen Feldlinien, die von den Teilen der Blechpakete 10 und 11 der einen Polarität auf diejenigen der anderen Polarität übergehen, innerhalb des Strömungskanales oder Strömungsrohres 1 Bereiche durchsetzen, welche in Strömungsrichtung stromauf und stromab von den elektrodennahen Bereichen liegen, wobei die Richtung der Feldlinien in diesen stromauf und stromab gelegenen Bereichen zu dem von den Spulen 7 und 8 aufgebauten Magnetfeld entgegengesetzt ist. Hierdurch ergibt sich die angestrebte erhöhte Unabhängigkeit des Meßergebnisses von der Art des Strömungsprofiles im Querschnitt des Strömungskanales oder des Strömungsrohres.

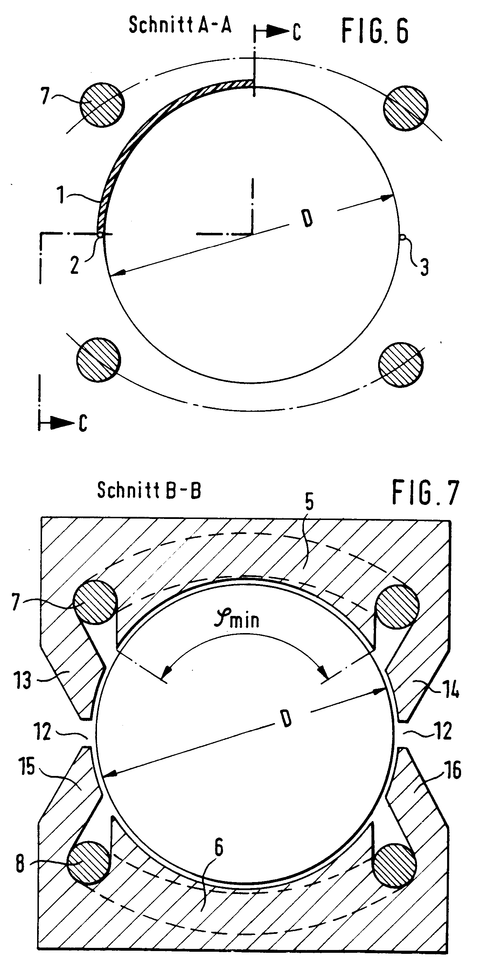

Figur 5 zeigt einen teilweisen Axialschnitt durch eine andere Ausführungsform des induktiven Durchflußmessers vorliegender Art. Bei dieser Ausführungsform umschlingen die stromdurchflossenen Spulen 7 und 8 mit Bezug auf die Darstellung in einem Radialschnitt in der aus den Figuren 6 und 7 erkennbaren Weise einander diametral gegenüberliegend den Strömungskanal oder das Strömungsrohr über einen Winkel von mindestens 120° und sind jeweils um Blechpakete gelegt, welche den Polschuhen 5 und 6 nach Figur 1 entsprechen und demgemäß auch in Figur 5 paarweise entsprechend bezeichnet sind. Die Teilung der Blechpaketanordnung in Axialrichtung erfolgt bei der Anordnung nach Figur 5, um die dem Hauptmagnetfeld entgegengerichteten Hilfsfelder zwischen den Polen i und k von dem elektrodennahen Bereich fernzuhalten und auf die stromauf und stromab sich an das Mittelteil b (siehe Figur 1a) anschließenden Abschnitte c und d des Strömungsweges zu begrenzen. Ferner wird, gleichsam als Begleiterscheinung, eine verbesserte Zugänglichkeit der Elektroden erzielt und außerdem erhält man die Wirkung, daß in demjenigen Kanalabschnitt, welcher die die Elektroden 2 und 3 enthaltende Radialebene als Mittelebene, aufweist, eine Vergleichmäßigung des transversalen magnetischen Feldes eintritt, so daß in diesem scheibenförmigen Kanalabschnitt oder Rohrabschnitt bei der Anordnung nach Figur 5 durch die Beabstandung der die Polschuhe 5 und 6 bildenden Blechpaketteile ähnliche magnetische Verhältnisse erzielt werden, wie sie in dem Kanalabschnitt b nach Figur 1a angenommen wurden.

Aus Figur 7 ist erkennbar, daß die Polschuhe 5 und 6 entsprechend dem Umschlingungswinkel der Spulen 7 und 8 ebenfalls einen mindestens 120° messenden Umschlingungswinkel am Umfang des Strömungskanals oder Strömungsrohres haben. An die Polschuhe 5 und 6 der Blechpaketteile sind jeweils Rückleitungsjoche und zugehörige Polschuhe gemäß der Darstellung von Figur 7 angesetzt. Dem Polschuh 5 sind also die beiden Rückschluß-Polschuhe 13 und 14 zugeordnet und dem Polschuh 5 sind die beiden Rückschluß-Polschuhe 15 und 16 zugeordnet. Die Rückschluß-Polschuhe 13 und 15 und die Rückschluß-Polschuhe 14 und 16 stehen sich über den Spalt 12 am Außenumfang des Strömungskanals oder Strömungsrohres gegenüber. Die magnetischen Feldlinien der Rückschluß-Polschuhe 13 und 15 und der Rückschluß-Polschuhe 14 und 16 durchsetzen den Querschnitt des Strömungskanals oder Ströhmungsrohres in einer Richtung entgegengesetzt zu dem sich zwischen den Polschuhen 5 und 6 erstreckenden magnetischen Hauptfeld. Die Wirkung dieses entgegengesetzt zum Hauptfeld orientierten Rückschluß-Magnetfeldes entspricht demjenigen, was bei der Erläuterung von Figur 1a im Zusammenhang mit der Hinzunahme der Hilfsmagnetfelder in den Kanalabschnitten c und d ausgeführt wurde. Auf diese Ausführungen sei hier nochmals ausdrücklich hingewiesen.

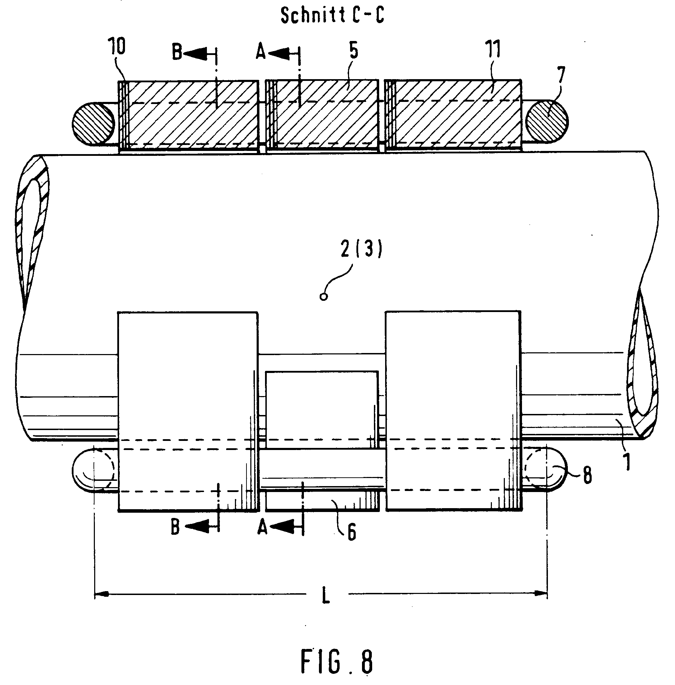

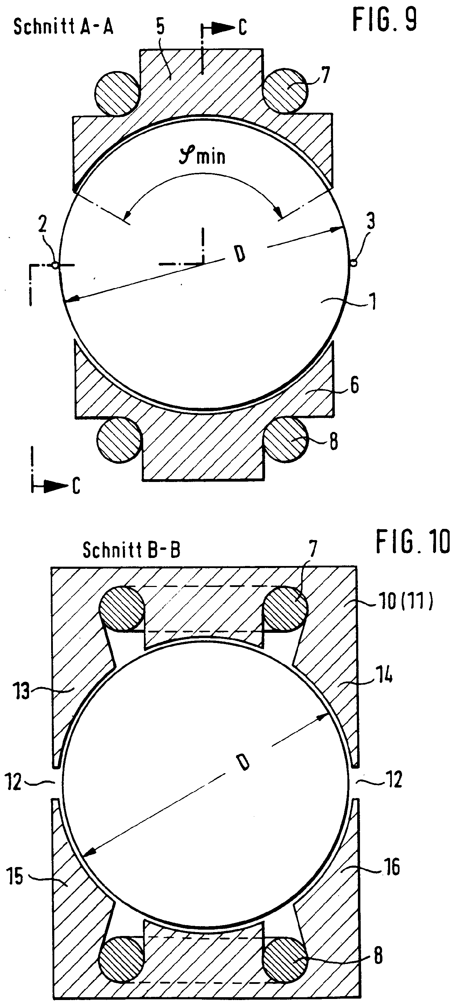

Figur 8 läßt in Verbindung mit den Figuren 9 und 10 erkennen, daß die Einleitung des magnetischen Hauptfeldes in den Innenraum des Kanalrohres unter Umschlingung desselben durch die Stromspulen 7 und 8 bei Formung dieser Stromspulen derart, daß sie in einer Ebene liegen, auch dadurch erreicht werden kann, daß die einander zugekehrten, zylindrisch gekrümmten Polschuhflächen der Polschuhe 5 und 6 einen entsprechenden Umschlingungswinkel von beispielsweise 120° oder darüber verwirklichen.

An die zur Erzeugung des Hauptfeldes dienenden, die Polschuhe 5 und 6 darstellenden Blechpakete in der Querschnittsgestaltung nach Figur 9 schließen sich stromaufwärts und stromabwärts in Axialrichtung Rückschluß-Blechpakete 10 bzw. 11 an, deren Querschnittsgestalt aus Figur 10 erkennbar ist.

Die Rückschluß-Blechpakete 10 und 11 der Ausführungsform nach den Figuren 8 bis 10 besitzen ähnliche Gestalt wie die die Polschuhe 5 und 6 ausbildenden Blechpakete der Ausführungsform nach den Figuren 5 bis 7 und enthalten Nuten zur Einlegung der achsparallel verlaufenden Abschnitte der Stromspulen 7 und 8, wobei jedoch diese Nuten solche Tiefe haben, daß die achsparallelen Spulenseiten von sie aufnehmenden Nieschen des mittleren Blechpaketes der Querschnittsgestalt nach Figur 9 geradlinig in die Nuten der Blechpakete 10 und 11 eintreten können. An den Blechpaketen 10 und 11 umschlingen die Spulen 7 und 8 einen mittleren Polschuhbereich, dessen Polschuhfläche jeweils zum Außenumfang des Kanalrohres 1 reicht und zylinderflächenförmig ist, doch ist dieser mittlere Polschuhbereich in Umfangsrichtung kleiner als bei den die Polschuhe 5 und 6 ausbildenden mittleren Blechpaketen deren Polschuhflächen, wie in Figur 9 gezeigt und bereits gesagt, mindestens 120° in Umfangsrichtung des Kanalrohres 1 im Bereich der die Elektroden 2 und 3 enthaltenden Radialebene einnehmen.

Seitliche Rückschluß-Schenkel der Blechpakete 10 und 11 sind in Analogie zu der Bezeichnung der entsprechenden Teile der Ausführungsform nach den Figuren 5 bis 7 mit 13 bis 16 bezeichnet und stehen sich jeweils über achsparallel verlaufende Spalträume 12 gegenüber, so daß stromauf und stromab von den Elektroden 2 und 3 zwischen den Schenkeln 13 und 15 sowie 14 und 16 verlaufende magnetische Feldlinien den Innenraum des Kanalrohres 1 durchsetzen, wobei das Feld hier entgegengesetzt zu dem zwischen den Polschuhen 5 und 6 errichteten Magnetfeld orientiert ist.

## Patentansprüche

1. Induktiver Durchflußmesser zur Bestimmung des Durchflusses elektrisch leitfähiger Flüssigkeiten durch einen eine elektrisch isolierende Wand aufweisenden, insbesondere im Querschnitt kreisförmigen Kanalabschnitt (1), der an einander diametral gegenüberliegenden Stellen seiner Innenwand mit zu Anschlüssen außerhalb des Strömungskanales verbundene punktförmige Elektroden (2, 3) aufweist, mit einem Magnetfelderzeugungssystem, mittels welchem ein den Strömungskanal (1) in der die punktförmigen Elektroden (2, 3) enthaltenden Querschnittsebene durchsetzendes Haupt-Magnetfeld erzeugbar ist, dessen Feldlinien (4) im wesentlichen senkrecht zur Verbindungslinie zwischen den Elektroden und zu den Strömungslinien der Strömung der zu untersuchenden leitenden Flüssigkeit orientiert sind, sowie schließlich mit magnetischen Rückschlußeinrichtungen (10, 11, 13 bis 16) zur Verminderung des magnetischen Widerstandes des magnetischen Schließungskreises, dadurch gekennzeichnet, daß die magnetischen Rückschlußeinrichtungen eine Luftspaltanordnung (12) enthalten, die sich mit Bezug auf den Umfang des Strömungskanals an denjenigen Stellen befindet, die die punktförmigen Elektroden (2, 3) einschließt und mit Bezug auf die Axialrichtung stromauf und stromab der elektrodennahen Bereiche gelegen sind, derart, daß die die Spalträume der Spaltanordnung überbrückenden magnetischen Feldlinien des magnetischen Rückschlusses den Kanalinnenraum durchsetzen, wobei die Feldlinien hier entgegengesetzt zu dem Haupt-Magnetfeld orientiert sind.

2. Durchflußmesser nach Anspruch 1, dadurch gekennzeichnet, daß zur Erzeugung der den Innenraum des Strömungskanals (1) durchsetzenden Magnetfelder stromdurchflossene Spulen (7, 8) dienen.

3. Durchflußmesser nach Anspruch 2, dadurch gekennzeichnet, daß die stromdurchflossenen Spulen in einer Richtung senkrecht zur Verbindungslinie zwischen den punktförmigen Elektroden (2, 3) und senkrecht zur Mittellängsachse des Strömungskanals (1) einander auf der Außenseite des Strömungskanals diametral gegenüberliegend angeordnet sind.

4. Durchflußmesser nach Anspruch 3, dadurch gekennzeichnet, daß die stromdurchflossenen Spulen (8) jeweils Polschuhe (5, 6) umschlingen, deren Polschuhflächen im wesentlichen an der Außenfläche des Strömungskanals (1) anliegen.

5. Durchflußmesser nach einem der Ansprüche 2 bis 4, dadurch gekennzeichnet, daß die stromdurchflossenen Spulen (7, 8) bzw. die von ihnen umschlungenen Polschuhe (5, 6) mit ihren Polschuhflächen bezogen auf einen die punktförmigen Elektroden (2, 3) enthaltenden kreisförmigen Querschnitt des Strömungskanals (1) jeweils bei symmetrischer Anordnung zu der zur Verbindungslinie zwischen den Elektroden senkrechten Durchmesserlinie einen Umfangsbereich von mindestens 120° einnehmen.

6. Durchflußmesser nach einem der Ansprüche 1 bis 5, dadurch gekennzeichnet, daß die Rückschlußeinrichtungen von stromauf und stromab der die punktförmigen Elektroden (2, 3) enthaltenden Querschnittsebene des Strömungskanals (1) gelegenen Rückschluß-Blechpaketen (10, 11) gebildet sind, die mit einer dem Querschnitt des Strömungskanals angepaßten Durchtrittsöffnung versehen und in einer Richtung parallel zur Längssachse des Strömungskanales längs der Spalträume (12) der Spaltanordnung geteilt ausgebildet sind.

7. Durchflußmesser nach Anspruch 4, dadurch gekennzeichnet, daß die Polschuhe (5, 6) in einer die punktförmigen Elektroden (2, 3) enhaltenden Querschnittsebene geteilt und die Polschuhteile in Axialrichtung symmetrisch mit Bezug auf die genannte Querschnittsebene beabstandet sind und daß die Rückschlußeinrichtungen von an die Polschuhteile angesetzten Rückschlußschenkeln (13 bis 16) gebildet sind, welche in einer Richtung parallel zur Längsachse des Strömungskanals (1) über die Spalträume (12) der Spaltanordnung einander paarweise gegenüberstehen.

8. Durchflußmesser nach Anspruch 7, dadurch gekennzeichnet, daß die Polschuhe (5, 6) und die Rückschlußschenkel (13 bis 16) als Bleckpakete ausgeführt sind.

9. Durchflußmesser nach Anspruch 8, dadurch gekennzeichnet, daß die stromdurchflossenen Spulen (7, 8) jeweils beide Blechpaketteile durchdringen und in axial fluchtende Nuten dieser Blechpaketteile eingelegt sind.

10. Durchflußmesser nach einem der Ansprüche 7 bis 9, dadurch gekennzeichnet, daß im Bereich der die punktförmigen Elekroden (2, 3) enthaltenden Querschnittsebene zwischen den von den stromdurchflossenen Spulen (7, 8) umschlungenen Polschuhteilen zusätzliche, ebenfalls von den stromdurchflossenen Spulen umschlungene Polschuhe (5, 6) vorgesehen sind, deren Polschuhflächen in diesem Bereich symmetrisch zu einer zur Verbindungslinie zwischen den Elektroden senkrechte Durchmesserlinie des Querschnittes jeweils einen Unfangsbereich des Außenumfanges des Strömungskanals (1) von mindestens 120° einnehmen und die keine Rückschlußschenkel tragen (Figuren 8 bis 10).

## Claims

1. Inductive flow meter for determining the flow of electrically conducting liquids through a channel section (1) having an electrically insulating wall and being particularly of circular cross section, said channel section being provided with dot-shaped electrodes (2, 3) on diametrically opposed spots of its inner wall being connected to terminals outside the flow channel, with a magnetic field generation system by which a main magnetic field permeating the flow channel (1) in the cross section plane including the dot-shaped electrodes (2, 3) can be generated, the field lines (4) of which are oriented substantially perpendicular to the connecting line between the electrodes and to the flow lines of the flow of the conducting liquid to be tested, and finally with magnetic reflux means (10, 11, 13 to 16) for reducing the magnetic resistance of the magnetic circuit, characterized in that the magnetic reflux means comprise an air gap arrangement (12) which, in relation to the circumference of the flow channel, is provided at locations including the dot-shaped electrodes (2, 3) and, in relation to the axial direction, are positioned upstream and downstream of areas in the neighbourhood of the electrodes, so that the magnetic field lines of the magnetic reflux bridging the gap of the gap arrangement permeate the inner space of the channel, whereby said field lines, here, are oriented opposite to the main magnetic field.

2. Flow meter in accordance with claim 1, characterized in that, for generating the magnetic fields permeating the inner space of the flow channel (1) there are utilized coils (7, 8) flown through by current.

3. Flow meter according to claim 2, characterized in that said coils flown through by current are located in a direction perpendicular to the connecting line between said dot-shaped electrodes (2, 3) and perpendicular to the central longitudinal axis of the flow channel (1) diametrically opposed to one another on the outer side of the flow channel.

4. Flow meter according to claims 3, characterized in that said coils (8) flown through by current respectively surround pole shoes (5, 6), the pole shoe surfaces of which substantially contact the outer surface of the flow channel (1).

5. Flow meter according to one of the claims 2 to 4, characterized in that the coils (7, 8) flown through by current or the pole shoes (5, 6) encircled by them, with their pole shoe areas in relation to a circular cross section of the flow channel (1) including the dot-shaped electrodes (2, 3), comprise a circumferential range of at least 120° with a symmetrical arrangement in relation to a diameter line perpendicular to the connecting line between the electrodes.

6. Flow meter in accordance with one of the claims 1 to 5, characterized in that the reflux means are formed of reflux-laminated bundles (10, 11) positioned upstream and downstream of the cross section plane of the flow channel (1) including the dot-shaped electrodes (2, 3), said laminated bundles being provided with an opening adapted to the cross section of the flow channel and, in a direction parallel to the longitudinal axis of the flow channel, being divided in length direction of the gaps (12) of the gap arrangement.

7. Flow meter in accordance with claim 4, characterized in that the pole shoes (5, 6) are divided in a cross section plane including the dot-shaped electrodes (2, 3) and the pole shoe parts, in axial direction, have symmetrical distance in relation to said cross section plane and that the reflux means are formed by reflux branches (13 to 16) attached to the pole shoe parts, which reflux branches are opposite to each other pairwise across the gap spaces (12) of the gap arrangement in a direction parallel to the longitudinal axis of the flow channel (1).

8. Flow meter in accordance with claim 7, characterized in that the pole shoes (5, 6) and the reflux branches (13 to 16) are designed as laminated bundles.

9. Flow meter in accordance with claim 8, characterized in that the coils (7, 8) flown through by current respectively permeate both laminated bundles and are inserted in axially aligned grooves of said laminated bundles.

10. Flow meter in accordance with one of the claims 7 to 9, characterized in that, in the area of the cross section plane including the dot-shaped electrodes (2, 3) between the pole shoe parts encircled by the coils (7, 8) flown through by current, there are provided additional pole shoes (5, 6) also being encircled by said coils flown through by current, the pole shoe areas of which, in this range, are symmetrical to a diameter line of the cross section perpendicular to the connecting line between the electrodes and each comprising a circumferential range of the outer circumference of the flow channel (1) of at least 120° and are not provided with reflux branches (Figures 8 to 10).

## Revendications

1. Débitmètre inductif pour mesurer le débit de liquides électroconducteurs passant à travers un tronçon de canal (1), lequel présente une paroi à isolation électrique, et, en particulier en section transversale, une forme circulaire, comportant à des endroits diamétralement opposés de sa paroi interne des électrodes ponctuelles (2, 3) connectées à des raccordements placés à l'extérieur du canal d'écoulement, comportant un système générateur de champs magnétiques permettant de produire un champ magnétique principal qui traverse le canal d'écoulement (1) dans le plan de section transversale contenant les électrodes ponctuelles (2, 3) et dont les lignes de champ (4) sont orientées essentiellement perpendiculairement par rapport à la ligne de liaison entre les électrodes et par rapport aux lignes d'écoulement du courant du liquide conducteur à analyser et comportant enfin des dispositifs de court-circuit magnétiques (10, 11, 13 à 19) pour réduire la résistance magnétique du circuit de fermeture magnétique, caractérisé en ce que les dispositifs de court-circuit magnétiques comportent une disposition d'entrefers (12) qui se trouve par rapport à la périphérie du canal d'écoulement aux endroits qui contiennent les électrodes ponctuelles (2, 3) et par rapport au sens axial en amont et en aval des zones proches des électrodes, de façon à ce que les lignes de champ magnétique du court-circuit magnétique, qui court-circuitent les entrefers de la disposition d'entrefers, traversent l'intérieur du canal, les lignes de champ étant orientées ici en sens inverse par rapport au champ magnétique principal.

2. Débitmètre selon la revendication 1, caractérisé en ce que les champs magnétiques traversant l'intérieur du canal d'écoulement (1) sont générés par des bobines (7, 8) parcourues par le courant.

3. Débitmètre selon la revendication 2, caractérisé en ce que les bobines parcourues par le courant sont disposées, dans un sens, perpendiculairement à la ligne de liaison entre les électrodes ponctuelles (2, 3) et perpendiculairement à l'axe longitudinal central du canal d'écoulement (1) et diamétralement opposées l'une par rapport à l'autre sur la face extérieure du canal d'écoulement (1).

4. Débitmètre selon la revendication 3, caractérisé en ce que les bobines (8) parcourues par le courant enroulent chacune des cornes polaires (5, 6) dont les faces polaires touchent essentiellement la face externe du canal d'écoulement (1).

5. Débitmétre selon l'une des revendications 2 à 4, caractérisé en ce que les bobines (7, 8) parcourues par le courant, respectivement les cornes polaires (5, 6) qu'elles enroulent, occupent chacune avec leurs faces polaires rapportées à une section transversale circulaire du canal d'écoulement (1) contenant les électrodes ponctuelles (2, 3), lorsque leur disposition est symétrique par rapport à la ligne diamétrale qui elle est perpendiculaire à la ligne de liaison entre les électrodes, un périmètre d'au moins 120°.

6. Débitmètre selon l'une des revendications 1 à 5, caractérisé en ce que les dispositifs de court-circuit sont formés par des paquets de tôles de court-circuit (10, 11) placés en amont et en aval du plan de section transversale du canal d'écoulement (1) contenant les électrodes ponctuelles (2, 3), lesquels paquets sont munis d'une ouverture de passage adaptée à la section du canal d'écoulement et divisés dans un sens, parallèle à l'axe longitudinal du canal d'écoulement, le long des entrefers (12).

7. Débitmètre selon la revendication 4, caractérisé en ce que les cornes polaires (5, 6) sont divisées dans un plan de section transversale contenant les électrodes ponctuelles (2, 3) et les pièces polaires distancées symétriquement dans le sens axial par rapport audit plan de section transversale, et en ce que les dispositifs de court-circuit sont formés par des branches de court-circuit (13 à 16) fixées sur les pièces polaires, lesquelles branches sont placées par paire l'une en face de l'autre dans un sens parallèle à l'axe longitudinal du canal d'écoulement (1) au-delà des entrefers (12) de la disposition d'entrefers.

8. Débitmètre selon la revendication 7, caractérisé en ce que les cornes polaires (5, 6) et les branches de court-circuit (13 à 16) sont conçues sous forme de paquets de tôles.

9. Débitmètre selon la revendication 8, caractérisé en ce que les bobines (7, 8) parcourues par le courant traversent chaque fois les deux paquets de tôles et sont logées dans des rainures alignées dans l'axe qui sont ménagées dans lesdits paquets de tôles.

10. Débitmètre selon l'une quelconque des revendications 7 à 9, caractérisé en ce que dans la partie de section transversale contenant les électrodes ponctuelles (2, 3), entre les pièces polaires qui sont enroulées par les bobines (7, 8) parcourues par le courant, sont prévues des cornes polaires (5, 6) supplémentaires, elles aussi parcourues par le courant, dont les faces polaires occupent dans cette partie, symétriquement par rapport à une ligne diamétrale perpendiculaire à la ligne de liaison entre les électrodes, chaque fois une partie périphérique du périmètre extérieur du canal d'écoulement (1) d'au moins 120°, et qui n'ont pas de branches de court-circuit (figures 8 à 10).
